# EUROPÄISCHE PATENTSCHRIFT

(11) **EP 2 785 795 B1**
(45) Veröffentlichungstag und Bekanntmachung des Hinweises auf die Patenterteilung: **07.06.2017**
(21) Anmeldenummer: 12794298.5
(22) Anmeldetag: 27.11.2012
(51) Int. Cl.: C08L 69/00, C09D 183/04, B32B 27/20, C08K 3/04, C08K 5/3465, C08K 5/3417, C08K 5/18, C08K 5/00, B60J 10/16, B32B 27/08, C08J 7/04, B32B 27/36

(54) **MEHRSCHICHTKÖRPER AUS POLYCARBONAT MIT TIEFENGLANZEFFEKT**
MULTI-LAYER POLYCARBONATE BODY WITH DEPTH GLAZE EFFECT
CORPS MULTICOUCHE EN POLYCARBONATE AYANT UN EFFET DE BRILLANCE PROFONDE

(30) Priorität: 30.11.2011 EP 11191314
(43) Veröffentlichungstag der Anmeldung: 08.10.2014
(73) Patentinhaber: Covestro Deutschland AG, 51373 Leverkusen (DE)
(72) Erfinder: MEYER, Alexander, 40489 Düsseldorf (DE); REICHENAUER, Jörg, 47802 Krefeld (DE); CAPELLEN, Peter, 47803 Krefeld (DE)
(74) Vertreter: Levpat
(86) Internationale Anmeldenummer: PCT/EP2012/073712
(87) Internationale Veröffentlichungsnummer: WO 2013/079477

(56) Entgegenhaltungen:
- EP-A1- 0 349 219
- WO-A1-2011/141369
- WO-A2-2009/074504
- "ISO 13468-2 Plastics -- Determination of the total luminous transmittance of transparent materials -- Part 2: Double-beam instrument", INTERNATIONAL STANDARD ISO/IEC, XX, XX, 1. Januar 1999 (1999-01-01), XP009158647, in der Anmeldung erwähnt

## Beschreibung

Die vorliegende Erfindung betrifft dunkle Mehrschichtkörper aus Polycarbonat, die sich durch einen glasartigen Tiefenglanzeffekt an der Oberfläche auszeichnen. Die Erfindung betrifft auch ein Verfahren zur Herstellung dieser Mehrschichtkörper.

Die Mehrschichtkörper sind bevorzugt aus Polycarbonat bzw. Polycarbonatblends aufgebaut. Die Polycarbonatblends können weitere Polymerisate, wie z.B. Elastomere bzw. Pfropfpolymerisate oder weitere Thermoplaste, wie z.B. Polyester enthalten.

Die Erfindung betrifft ferner die Verwendung der erfindungsgemäßen Mehrschichtkörper als Blenden für Fahrzeugteile oder als Rahmenteile für Multimediagehäuse.

Von transparenten Anwendungen her sind Mehrschichtkörper bekannt. So beschreibt beispielsweise WO 2011/141369 A1 einen Mehrschichtkörper mit mindestens einer Schicht aus einer Polymerzusammensetzung enthaltend mindestens einen transparenten thermoplastischen Kunststoff, mindestens einen anorganischen IR-Absorber aus der Gruppe der Boridverbindungen mit einem Anteil von 0,00150 bis 0,01500 Gew.-%, berechnet als Feststoffanteil an Borid in der Polymerzusammensetzung, und mindestens ein anorganisches, nanoskaliges Pigment in einem Anteil von 0,00080 bis 0,00350 Gew.-%, sowie mit mindestens einer UV-Schutzschicht und einer Kratzfestbeschichtung, in welcher Farbmittel wie Perinon- oder Perylen-basierte Pigmente enthalten sein können.

Bislang fehlte es an Mehrschichtsystemen, insbesondere Mehrschichtkunstoffformteilen, aus Polycarbonat, welche sich durch eine glasartige Optik auszeichnen. Diese Mehrschichtkörper sind insbesondere für Fahrzeug-Außenteile geeignet. Sie müssen über eine ausgezeichnete Oberflächenqualität, einen Tiefenglanzeffekt sowie über eine ausgezeichnete Bewitterungsstabilität verfügen. Zu den Anwendungen zählen unter anderem Rahmenteile für Verscheibungen aus Glas wie z.B. Schiebedächer. Aufgrund der hohen Lebensdauer von Kraftfahrzeugen kommt es dabei insbesondere im Bereich hochpreisiger Automobile darauf an, dass der gewünschte qualitativ hochwertige Farbeindruck - hier der besonders schwarze Tiefenglanzeffekt - des Materials über den Zeitraum der Nutzungsdauer ohne nennenswerte Einbußen erhalten bleibt.

Diese Mehrschichtkörper bieten für den Einsatz im Fahrzeugbereich viele Vorteile gegenüber herkömmlichen Materialien wie z.B. Glas. Hierzu zählen z.B. erhöhte Bruchsicherheit und/oder Gewichtsersparnis, die im Fall von Automobilen eine höhere Insassensicherheit bei Verkehrsunfällen und einen niedrigeren Kraftstoffverbrauch ermöglichen. Schließlich lassen Werkstoffe, die thermoplastische Polymere enthalten, aufgrund der einfacheren Formbarkeit eine wesentlich größere Designfreiheit zu.

Kfz-Außenteile, welche im Kraftfahrzeug-, Schienenfahrzeug- und Luftfahrzeug- bzw. im Infrastrukturbereich eingesetzt werden, müssen zudem eine lange Lebensdauer aufweisen und dürfen während dieser nicht verspröden. Darüber hinaus sollen sich Farbe und Glanzeffekt über die Lebensdauer nicht oder nur geringfügig verändern. Ferner müssen die thermoplastischen Teile über eine ausreichende Kratzfestigkeit verfügen.

Aufgrund der hohen geforderten Lebensdauer und aufgrund der hohen Oberflächengüte und des Tiefenglanzeffekts wird als Material häufig Glas eingesetzt. Glas ist unempfindlich gegen UV-Strahlung, weist eine geringe Kratzempfindlichkeit auf und verändert die mechanischen Eigenschaften über lange Zeiträume nicht. Da als Pigmente anorganische Oxide, wie z.B. Eisenoxid, eingesetzt werden, verändern sich die Farbeigenschaften auch über lange Zeiträume praktisch nicht. Die Verwendung dieser Pigmente in thermoplastischen Materialien ist allerdings nicht möglich, da sie zu einem Abbau der entsprechenden Matrix führt.

Dennoch besteht aufgrund der oben geschilderten Vorteile von Kunststoffen der Bedarf an Materialien, die sowohl die guten physikalischen Eigenschaften von Thermoplasten als auch die hohe Oberflächenqualität wie auch den gewünschten Tiefenglanzeffekt entsprechend schwarzeingefärbter Gläser aufweisen.

Unter den transparenten thermoplastischen Kunststoffen sind zum Beispiel Polymere basierend auf Polycarbonat und Polymethylmethacrylat (PMMA) besonders gut für die Verwendung als Außenteile für Kfz-Anwendungen geeignet. Aufgrund der hohen Zähigkeit besitzt insbesondere Polycarbonat ein sehr gutes Eigenschaftsprofil für derartige Einsatzzwecke.

Um die Langlebigkeit von thermoplastischen Materialien zu verbessern, ist es bekannt, diese mit UV-Schutz und/oder Kratzfestbeschichtungen zu versehen. Darüber hinaus ist eine große Anzahl von Farbmitteln bekannt, die eine hohe Lichtechtheit aufweisen.

Es zeigte sich allerdings, dass die im Stand der Technik genannten thermoplastischen Zusammensetzungen nur unzureichend geeignet sind, wenn eine außerordentlich hohe Bewitterungsstabilität mit hoher Oberflächengüte und einem hohen Tiefenglanzeffekt sowie eine Klavierlackoptik erforderlich ist. Insbesondere für tief schwarze Bauteile mit einer Klavierlackartigen Oberfläche für Außenanwendungen bietet der Stand der Technik keine Lösungsmöglichkeiten.

Im Stand der Technik werden schwarze oder dunkle Außenteile häufig mit Ruß eingefärbt, um den gewünschten Schwarz-Eindruck zu erhalten. Der Einsatz von Ruß ist allerdings problematisch, da er zu Oberflächendefekten führen kann. Ruß in nanoskaliger Form sollte aufgrund der geringen Teilchengröße eigentlich die Oberfläche nicht beeinflussen, jedoch bilden sich sehr leicht Agglomerate, die dann wieder zu Oberflächenstörungen führen. Diese Oberflächenstörungen sind mit dem Auge wahrnehmbar. Ferner stellen diese Oberflächenstörungen aber für eine nachfolgende Beschichtung Defektstellen dar, so dass bei Bewitterung der Lack an dieser Stelle zu Delaminierung, Rissbildung etc. neigt. Deshalb ist eine hohe Oberflächengüte mit möglichst wenig Defektstellen sowohl aus optischen als auch aus technischen Gründen von großem Vorteil. Häufig wird auch versucht, den Ruß in Form einer Dispersion in die thermoplastische Matrix einzubringen. Diese Dispergiermittel sind aber häufig funktionalisiert, um die anorganischen Partikel in Dispersion zu halten, wobei diese funktionellen Gruppen allerdings der thermoplastischen Matrix schaden, insbesondere der Polycarbonatmatrix, und deshalb unerwünscht sind.

Wenn Ruß als Einfärbemittel verwendet wird, weisen die Spritzgussartikel häufig keinen Tiefenglanzeffekt auf, sondern wirken stumpf und teilweise aufgrund des Absorptionspektrums von Kohlenstoff leicht gelblich. Mit sehr geringen Rußkonzentrationen geht dagegen der tiefe Schwarzeindruck verloren.

Auch mittels nanoskaliger oder feinteiliger Kohlenstoffmodifikationen wie z.B. Kohlenstoffnanoröhren, wie in WO 2009030357 beschrieben, oder Graphit, wie in JP 2003073557 gezeigt, kann eine hochglänzende Oberfläche erreicht werden. Jedoch wird über die Stab- bzw. Plättchen-artige Form der Teilchen dem Spritzgusskörper eine gewisse Oberflächenrauhigkeit aufgeprägt, welche unerwünscht ist.

Um die oben beschriebenen Nachteile, welche mit Ruß oder anderen Kohlenstoffmodifikationen verbunden sind, zu vermeiden, werden häufig lösliche Farbstoffe eingesetzt, um einen hohen Oberflächenglanz - eine Art Klavierlackoptik - zu erzielen. Nachteilig an dieser Lösung ist allerdings, dass die Farbstoffe in einer relativ hohen Konzentration eingesetzt werden müssen. Dies führt im Lackierprozess zu Problemen, da sich die in hoher Konzentration vorhandenen Farbstoffe durch die Lacklösemittel leicht aus der Oberfläche des Formteils herauslösen. Dadurch färbt sich die Lackierlösung nach und nach an. Im industriellen Lackierprozess wird die Lacklösung häufig im Kreis gefahren, um entsprechend Lacklösung zu sparen. Dadurch werden aber die Formteile nach und nach mit farbiger Lacklösung lackiert, was unerwünscht ist. Der Lack sollte farblos bleiben, um die Tiefenglanzoptik nicht zu beeinträchtigen. Auch werden bei großen industriellen Lackieranlagen verschiedene Bauteile mit derselben Lacklösung lackiert. Dann kommt es insbesondere bei transparenten Bauteilen oder Bauteilen bestimmter Farbe zwangsläufig zu Problemen. An dieser Stelle soll betont werden, dass leicht eingefärbte aber auch dunkle Farben wie z.B. Privacy-Farben, welche noch eine gewisse Transparenz aufweisen, deutlich geringere Farbstoffkonzentrationen nutzen. Hierbei kommt es dann nicht zum Anfärben der Lackierlösung durch Ausblutung der Kunststoffoberfläche. Ein weiterer Nachteil bei Nutzung organischer Farbstoffe stellt das Ausbleichen durch UV-Bestrahlung dar, so dass sich der Farbeindruck mit der Zeit verändert. Bestimmte Farbeinstellungen für Automobilaußenteile, die auch Farbstoffe nutzen, sind z.B. in JP 11106518 beschrieben.

Es bestand daher die Aufgabe, ein schwarzes Fertigteil mit einer Lichttransmission von weniger als 1,0%, bevorzugt weniger als 0,5%, weiter bevorzugt weniger als 0,2%, noch weiter bevorzugt weniger 0,1 % und besonders bevorzugt 0,0 %, aus einem thermoplastischen Material - vorzugsweise aus Polycarbonat - zu entwickeln, welches eine herausragende Oberflächengüte mit hohem Tiefenglanz, klavierlackartigem Schwarzeindruck sowie hoher Bewitterungsfestigkeit verbindet und für Rahmenteile im Kfz-Bereich oder für Multimediagehäuse, wie z.B. Fernsehrahmen o. ä., welche einer UV-Belastung ausgesetzt werden, geeignet ist.

Zudem soll die erfindungsgemäße Zusammensetzung nicht den gelblichen Farbeindruck wie Rußgefüllte Typen aufweisen. Das erfindungsgemäße Material weist bei der Lackierung von aus diesem hergestellten Spritzgussteilen mit für Polycarbonat geeigneten Lacken geringes oder kein Auszubluten auf, so dass die im Kreislauf gefahrene Überschusslacklösung nicht oder nur verringert angefärbt wird und so länger verwendet werden kann, ohne Fehlfarben zu erzeugen.

Als Lacklösemittel für Polycarbonat Primerlösung oder Lacklösung werden Ketone und Alkohole sowie deren Mischungen untereinander und auch in Kombination mit Wasser verwendet. Bevorzugt werden Diacetonalkohol (4-Hydroxy-4-methyl-pentan-2-on), 1-Methoxy-2-propanol, Butanol, Isopropanol oder Mischungen dieser Lösemittel und ganz besonders bevorzugt Diacetonalkohol (4-Hydroxy-4-methyl-pentan-2-on), 1-Methoxy-2-propanol bzw. Mischungen dieser Lösungsmittel eingesetzt.

Ferner war es Aufgabe der vorliegenden Erfindung, Mehrschichtkörper zur Verfügung zu stellen, die nur eine sehr geringe Anzahl an Oberflächendefekten aufweisen.

Die erfindungsgemäßen Mehrschichtkörper sind z.B. für schwarze Blenden, welche für Außenanwendungen im Kfz-Bereich vorgesehen sind, geeignet. Diese Blenden können z.B. Glaselemente wie Scheiben bzw. Schiebedächer umfassen bzw. einrahmen. Durch die schwarze Tiefenglanzoptik wirkt der Scheibenbereich vergrößert, da das Dach, wie z.B. ein Panoramadach, als Vollglasoptik erscheint. Auch Zierblenden können aus diesem Material gefertigt werden. Ferner sind Zwischenstücke, die Glaseinheiten optisch verbinden, gemeint, ebenso Zwischenstücke zwischen A- und B-Säule im Automobilbereich. An dem Rahmen sind ggf. Versteifungsrippen, Montagehilfen und Bereiche zur Aufnahme der Kleberaupe angespritzt, um eine entsprechend leichte Montage zu ermöglichen. Ferner kann eine spezielle Formgebung, wie eine spezielle 3-dimensionale Form, vorhanden sein. Da die Rahmen relativ groß sind und eine komplexe Geometrie aufweisen, muss das thermoplastische Material eine ausreichende Fließfähigkeit aufweisen, um im Spritzgussprozess, wie z.B. speziell dem Spritzprägeverfahren, zu entsprechenden Formkörpern verarbeitet werden zu können.

Das Material ist auch für Rahmen oder Gehäuse, welche im Elektro- oder Multimedia-Bereich eingesetzt werden, geeignet. Beispiele wären hier z.B. Fernsehrahmen, Laptopgehäuse, Lampenabdeckungen etc.

Eine weitere Aufgabe der vorliegenden Erfindung war es, ein Verfahren zur Herstellung von thermoplastischen Mehrschichtkörpern mit den oben beschriebenen Eigenschaften bereitzustellen. Überraschenderweise konnte die Aufgabe durch spezielle Mehrschichtkunstoffformteile, welche ein Substratmaterial aus speziellen Farbmitteln enthalten und eine UV- und Kratzfestbeschichtung aufweisen, gelöst werden. Es zeigte sich, dass sich nur ganz bestimmte Farbmittelmischungen in Kombination mit einer transparenten Lackschicht eignen, um den gewünschten Tiefenglanzeffekt und die gewünschte Farbstabilität mit geringer Neigung zum Ausbluten zu erzielen.

Die zugrundeliegenden Aufgaben werden durch die erfindungsgemäßen thermoplastischen Polymer-Zusammensetzungen und Mehrschichtsysteme mit einer UV- und Kratzfestbeschichtung, hergestellt unter Verwendung eines erfindungsgemäßen Verfahrens, gelöst.

Der erfindungsgemäße Mehrschichtkörper umfasst:
1) eine Basisschicht mit einer Lichttransmission, bestimmt nach ISO 13468-2, von weniger als 1,0%, bevorzugt weniger als 0,5%, weiter bevorzugt weniger als 0,2%, noch weiter bevorzugt weniger 0,1 % und besonders bevorzugt 0,0 %, enthaltend
   1.1) mindestens einen Thermoplasten, bevorzugt Polycarbonat, weiter bevorzugt mit einer Schmelzvolumenrate von
      i. 6 cm³/(10 min) bis 25 cm³/(10 min),
      ii. bevorzugt 9 bis 21 cm³/(10 min), nach ISO 1133 (bei 300 °C und 1,2 kg Belastung),
   1.2) mindestens ein Farbmittel, ausgewählt aus der Gruppe, bestehend aus den Strukturen 1a, 1b: 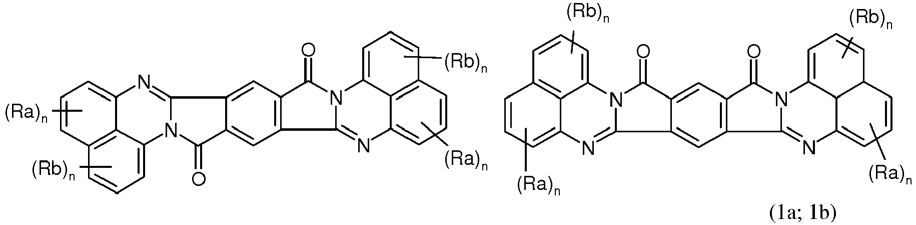
   wobei
   - Ra und Rb unabhängig voneinander für einen linearen oder verzweigten Alkylrest oder Halogen steht, bevorzugt für Methyl, Ethyl, Propyl, Isopropyl, Butyl, Isobutyl, tert.-Butyl, Pentyl, Neopentyl, Hexyl, Thexyl oder Cl, weiter bevorzugt für Methyl, Cl und besonders bevorzugt für Cl steht,
   - n steht unabhängig vom jeweiligen R für eine natürliche Zahl zwischen 0 und 3, wobei der Rest für n=0 Wasserstoff ist,
      2a, 2b: 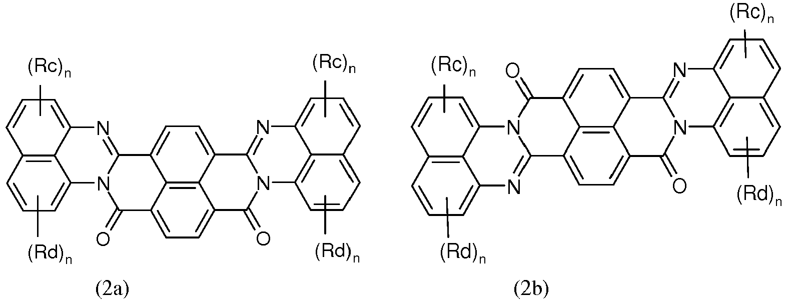 wobei
      - Rc und Rd unabhängig voneinander für einen linearen oder verzweigten Alkylrest, oder Halogen steht;
      - n steht unabhängig vom jeweiligen R für eine natürliche Zahl zwischen 0 und 3, wobei der Rest für n=0 Wasserstoff ist.
2) mindestens auf einer Seite der Basisschicht eine Kratzfestbeschichtung auf Polysiloxanbasis mit einer Dicke von 2 bis 15 µm, insbesondere bevorzugt von 4,0 bis 12,0 µm, enthaltend mindestens einen UV-Absorber,
   wobei, sofern die Farbmittel der Strukturen (1a), (1b), (2a) und (2b) einzeln eingesetzt werden, diese Farbmittel jeweils in Konzentrationen von 0,05 bis 0,50 Gew.-% eingesetzt werden.

In einer bevorzugten Ausführungsform sind Ra und/oder Rb Cl und stehen in o und/oder p-Positionen zu den Kohlenstoffatomen, welche die Aminfunktionalitäten tragen, wie z.B. diorthochlornapthalino-, di-ortho, mono-para-chlornaphthalino, sowie mono-ortho-naphthalino. Ferner stellen in einer bevorzugten Ausführungsform Ra und Rb jeweils einen tert-butylrest dar, welcher sich bevorzugt in meta-Position zu den Kohlenstoffatomen, welche die Stickstofffunktionalitäten tragen, befinden.

In einer besonders bevorzugten Ausführungsform ist in allen Ringen n=0.

Rc und Rd steht unabhängig voneinander bevorzugt für Methyl, Ethyl, Propyl, Isopropyl, Butyl, Isobutyl, tert.-Butyl, Pentyl, Neopentyl, Hexyl, Thexyl oder Cl, weiter bevorzugt für Methyl, Cl und besonders bevorzugt für Cl.

In einer bevorzugten Ausführungsform sind Rc und/oder Rd Cl und stehen in o und/oder p-Positionen zu den Kohlenstoffatomen, welche die Aminfunktionalitäten tragen, wie z.B. diorthochlornapthalino-, di-ortho, mono-para-chlornaphthalino, sowie mono-ortho-naphthalino. Ferner stellen in einer bevorzugten Ausführungsform Rc und Rd jeweils einen tert-butylrest dar, welcher sich bevorzugt in meta-Position zu den Kohlenstoffatomen, welche die Stickstofffunktionalitäten tragen, befinden.

In einer besonders bevorzugten Ausführungsform ist in allen Ringen n=0, so dass alle Rc und Rd = H sind.

Die Strukturen (1a) und (1b) bzw. (2a) und (2b) verhalten sich isomer zueinander. Die jeweiligen Isomere können für sich allein oder in einem Gemisch eingesetzt werden. In einer besonderen Ausführungsform wird ein 1:1-Isomerengemisch (bezogen auf die jeweilige Menge des Isomers im Isomerengemisch in Gew.-%) von (1a) und (1b) bzw. (2a) und (2b) eingesetzt.

Die Herstellung derartiger Farbmittel ist z.B. in DE 2148101 oder WO 2009 074504 A1 beschrieben worden.

In einer weiteren Ausführungsform werden die Strukturen (1a), (1b), (2a) und (2b) als jeweils reine Isomere eingesetzt, wobei die reinen Isomere beispielsweise durch präparative HPLC erhalten werden können.

In einer besonderen Ausführungsform wird eine Kombination von Farbmitteln der Strukturen (1a), (1b), (2a) und (2b) eingesetzt.

Bevorzugt werden diese Kombinationen in Konzentrationen von 0,01 Gew.-% bis 0,50 Gew.-%, bevorzugt von 0,02 Gew.-% bis 0,30 Gew.-% und besonders bevorzugt von 0,03 Gew.-% bis 0,25 Gew.-% eingesetzt.

Werden die Farbmittel der Strukturen (1a), (1b), (2a) und (2b) einzeln eingesetzt, werden diese Farbmittel jeweils in Konzentrationen von 0,05 Gew.-% bis 0,50 Gew.-%, bevorzugt von 0,10 Gew.-% bis 0,30 Gew.-%, eingesetzt.

Die Basisschicht kann weiterhin enthalten:
1.3) optional nanoskaligen Ruß in einer Konzentration von weniger als 0,03 Gew.-%, weiter bevorzugt weniger als 0,025 Gew.-%, noch weiter bevorzugt weniger als 0,02 Gew.-%.
   Besonders bevorzugt ist die Zusammensetzung frei von Ruß.
1.4) optional ein oder mehrere Farbmittel der folgenden Strukturen: 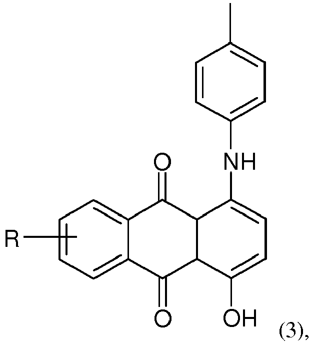 wobei
   R ausgewählt ist aus der Gruppe, die aus H und p-Methylphenlyamin-Rest besteht; bevorzugt ist R = H.
   Derartige Farbmittel sind z.B. unter dem Handelsnamen Macrolex® Violet B von der Firma Lanxess AG erhältlich. In einer besonderen Ausführungsform wird kein Farbmittel der Struktur (3) eingesetzt. 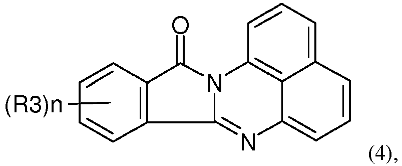 wobei R3 bevorzugt für Halogen, und insbesondere bevorzugt für Cl, steht, wobei besonders bevorzugt n=4 ist. Weiter bevorzugt ist eine Ausführungsform mit n=0, so dass R3 = H sind.

Derartige Farbmittel sind z.B. unter Macrolex® Orange 3G oder Macrolex® Rot EG bei der Firma Lanxess AG erhältlich.

Dabei kann, wenn R3 für Cl steht und n = 4 ist, statt dem Farbmittel der Struktur (4) das Farbmittel mit der Struktur (5) eingesetzt werden, um dieselben Farbeigenschaften zu erzielen:

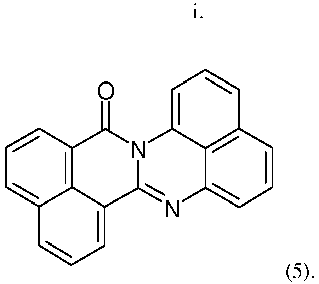

Derartige Farbmittel sind z.B. unter dem Handelsnamen Macrolex® Rot E2G bei der Firma Lanxess AG erhältlich. 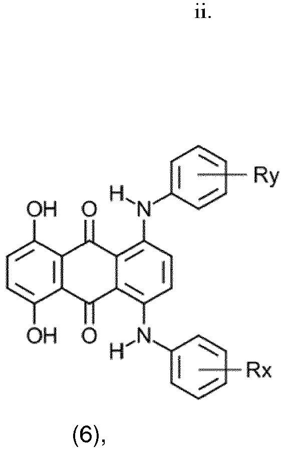 wobei Rx und Ry für einen verzweigten oder linearen Alkylrest stehen, insbesondere für einen linearen oder verzweigten C₁- bis C₁₂-Rest und besonders bevorzugt für Methyl, Ethyl, Propyl, n-Butyl, Isopropyl, Isobutyl, tert-Butyl, Pentyl, Hexyl, Heptyl, Octyl-Rest und ganz besonders bevorzugt für n-Butyl, tert-Butyl und Methyl. Derartige Farbmittel sind z.B. unter dem Handelsnamen Macrolex® Grün G (z.B. CAS-Nr. 28198-05-2, 4851-50-7) bei der Firma Lanxess AG erhältlich.

Die Bezeichnung C(Zahl) (z.B. C₁, C₁₂) bedeutet in der vorliegenden Erfindung eine Kohlenstoffkette mit einer Kettenlänge, die der nachfolgenden (Zahl) entspricht, wobei auch Strukturisomere umfasst sind. 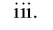 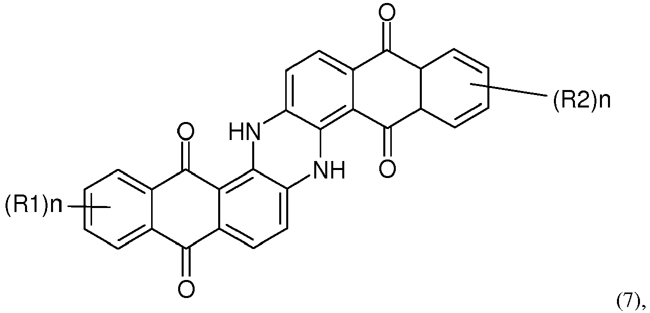 wobei
- R1 und R2 unabhängig voneinander für einen linearen oder verzweigten Alkylrest oder Halogen steht, bevorzugt für Methyl, Ethyl, Propyl, Isopropyl, Butyl, Isobutyl, tert.-Butyl, Pentyl, Neopentyl, Hexyl, Thexyl oder Cl, weiter bevorzugt für Methyl, Cl und besonders bevorzugt für Cl steht.
- n steht für eine natürliche Zahl zwischen 0 und 4.

In einer besonders bevorzugten Ausführungsform ist in allen Ringen n=0, so dass alle R1 und R2 = H sind.

Farbmittel dieser Struktur (7) sind kommerziell erhältlich unter der Paliogen Blau Reihe der BASF AG.

Bei Verwendung von Farbmitteln der Struktur (7) sind insbesondere die Pigmente bevorzugt, die ein Schüttvolumen (bestimmt nach DIN ISO 787-11) von 2 l/kg - 10 l/kg, bevorzugt 3 l/kg - 8 l/kg, eine spezifische Oberfläche (bestimmt nach DIN 66132) von 5 m²/g - 60 m²/g, bevorzugt 10 m²/g - 55 m²/g, und einen pH-Wert (bestimmt nach DIN ISO 787-9) von 4 - 9 aufweisen.

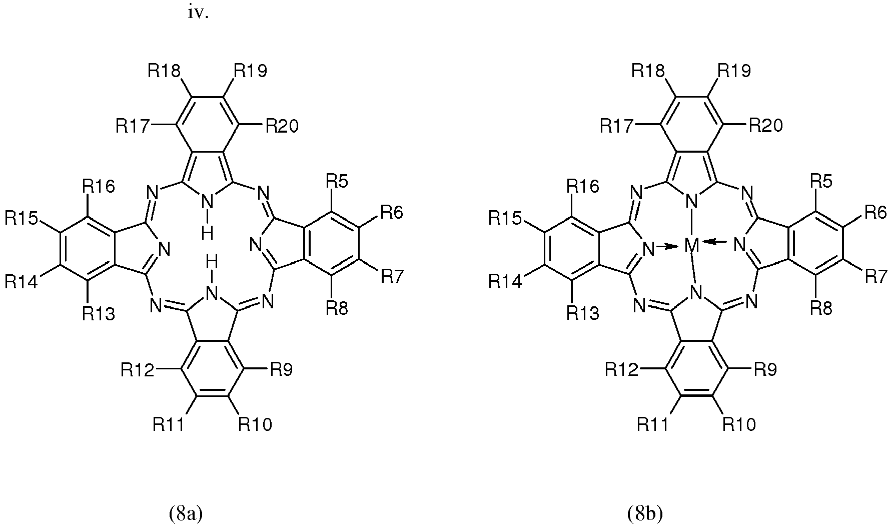

Die Reste R(5-20) sind jeweils unabhängig voneinander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon, CN.

Bevorzugt ist R(5-20) in allen Positionen gleich. Weiter bevorzugt ist R(5-20) in allen Positionen H. In einer alternativen Ausführungsform ist R(5-20) in allen Positionen Cl.

M ist bevorzugt Aluminium (mit R=H: Aluminiumphthalocyanin, CAS: 14154-42-8). Nickel (mit R=H: Nickelphthalocyanin, CAS: 14055-02-8), Cobalt (mit R=H: Kobaltphthalocyanin, CAS: 3317-67-7), Eisen (mit R=H: Eisenphthalocyanin, CAS: 132-16-1), Zink (mit R=H: Zinkphthalocyanin, CAS: 14320-04-08), Kupfer (mit R=H: Kupferphthalocyanin, CAS: 147-14-8; mit R=H und Cl: Polychlorkupferphthalocyanin, CAS: 1328-53-6; mit R=Cl: Hexadecachlorphthalocyanin, CAS: 28888-81-5; mit R=Br: Hexadecabromphthalocyanin, CAS: 28746-04-5), Mangan (mit R=H: Manganphthalocyanin, CAS: 14325-24-7).

Insbesondere bevorzugt ist die Kombination von M = Cu und R = H für alle Positionen. So ist eine Verbindung der Struktur (8b) mit M=Cu und R(5-20)=H als Heliogen® Blau K 6911D oder Heliogen® Blau K 7104 KW von der BASF AG, Ludwigshafen erhältlich.

Verbindungen der Struktur (8a) sind z.B. als Heliogen® Blau L 7460 von der BASF AG, Ludwigshafen, erhältlich.

Diese Farbmittel können, bezogen auf die jeweilige Einzelkomponente, in Mengen von 0,001 Gew.-% bis 0,050 Gew.-% eingesetzt werden. Bevorzugt werden diese Farbmittel in geringeren Konzentrationen als die Farbmittel (1a) und (1b) bzw. (2a) und (2b) eingesetzt.

Weiter bevorzugt kommt es bei Verwendung der Farbmittel nicht zu einer signifikanten Anfärbung der Lacklösung, d.h. die gemessene Farbänderung der Lacklösung (Gelbwert (YI) für Lichtart D 65 und 10° Normalbeobachter über die Messung der Farbkoordinaten (CIE), bestimmt und nach ASTM E313 berechnet), ist kleiner als | 15 | (Betrag 15), gemessen nach einer Extraktionszeit von 270 Minuten bei Raumtemperatur, bestimmt am Granulat.

Die Basisschicht kann außerdem enthalten:
1.5) optional 0,0 Gew.-% bis 1,0 Gew.-%, bevorzugt 0,01 Gew.-% bis 0,50 Gew.-%, besonders bevorzugt 0,01 Gew.-% bis 0,40 Gew.-% ein oder mehrere Entformer, bezogen auf die Gesamtmenge an Entformern,
1.6) optional 0,0 Gew% bis 20,00 Gew.-%, bevorzugt 0,05 Gew% bis 10,00 Gew.-%, weiter bevorzugt 0,10 Gew% bis 1,00 Gew.-%, noch weiter bevorzugt 0,10 Gew.-% bis 0,50 Gew.-% sowie ganz besonders bevorzugt 0,10 Gew.-% bis 0,30 Gew.-% mindestens ein oder mehrere UV-Absorber, bezogen auf die Gesamtmenge an UV-Absorbern,
1.7) optional 0,00 Gew.-%- 0,20 Gew.-%, bevorzugt 0,01 Gew.-% - 0,10 Gew.-%, ein oder mehrere Thermo- bzw. Verarbeitungsstabilisatoren, bezogen auf die Gesamtmenge an Thermo- bzw. Verarbeitungsstabilisatoren, bevorzugt ausgewählt aus der Gruppe der Phosphine, Phosphite und phenolischen Antioxidantien sowie deren Mischungen. In einer speziellen Ausführungsform der vorliegenden Erfindung werden 0,01 Gew.-% bis 0,05 Gew.-%, bevorzugt 0,015 Gew.-% bis 0,040 Gew.-% an Thermo- bzw. Verarbeitungsstabilisatoren eingesetzt.
1.8) optional 0,0 Gew.-% bis 5,0 Gew.-%, bevorzugt 0,01 Gew.-% bis 1,00 Gew.-% ein oder mehrere weitere Additiv, bezogen auf die Gesamtmenge an Additiven.

Die obigen Mengenangaben beziehen sich jeweils auf die gesamte Polymerzusammensetzung der Basisschicht, wobei die Menge des Thermoplasten zu 100% addiert.

In einer besonders bevorzugten Ausführungsform besteht die Basisschicht lediglich aus den oben genannten Komponenten.

Optional, in einer besonderen Ausführungsform, liegt mindestens eine auf der Basisschicht angeordnete haftvermittelnde Schicht (Primerschicht) zwischen der Basisschicht und der Kratzfestschicht enthaltend
i. UV-Schutzmittel,
   wobei
ii. die Dicke der Primerschicht 0,3 bis 8 µm, insbesondere bevorzugt 1,1 bis 4,0 µm, beträgt.

In einer weiteren bevorzugten Ausführungsform ist auf beiden Seiten der Basisschicht eine haftvermittelnde Schicht sowie eine Kratzfestschicht aufgetragen.

Die Tiefenoptik wird durch einen Mehrschichtkörper, enthaltend eine Substratschicht, welche die erfindungsgemäße Kombination der Farbstoffe enthält, sowie eine Primerschicht spezieller Dicke und eine Kratzfestschicht aus Polysiloxanlack erreicht. Nur die Kombination dieser Komponenten und Eigenschaften macht es möglich, einen derartigen Effekt zu erzielen.

Die thermoplastische Komponente der Basisschicht 1.1) besteht aus:
einem thermoplastischen, vorzugsweise transparenten thermoplastischen Kunststoff, bevorzugt Polycarbonat, Copolycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona) weiter bevorzugt Polycarbonat, Copolycarbonat, Polyestercarbonat, aromatische Polyester oder Polymethylmethacrylat, oder Mischungen der genannten Komponenten, und besonders bevorzugt Polycarbonat und Copolycarbonat, wobei der transparente thermoplastische Kunststoff in einer Menge zugegeben wird, dass diese mit allen übrigen Komponenten 100 Gew.-% ergibt.

Auch Mischungen von mehreren transparenten thermoplastischen Polymeren, insbesonder,e wenn sie transparent miteinander mischbar sind, sind möglich, wobei in einer speziellen Ausführungsform eine Mischung aus Polycarbonat mit PMMA (weiter bevorzugt mit PMMA < 2 Gew.%) oder Polyester bevorzugt ist.

Geeignete Polycarbonate für die Herstellung der erfindungsgemäßen Kunststoffzusammensetzung sind alle bekannten Polycarbonate. Dies sind Homopolycarbonate, Copolycarbonate und thermoplastische Polyestercarbonate.

Als Blendpartner eignen sich auch kautschukmodifizierte Vinyl(co)polymerisate und/oder weitere Elastomere.

Die geeigneten Polycarbonate haben bevorzugt mittlere Molekulargewichte M̅_{w} von 10.000 bis 50.000, vorzugsweise von 14.000 bis 40.000 und insbesondere von 16.000 bis 32.000, ermittelt durch Gelpermeationschromatographie mit Polycarbonateichung Die Herstellung der Polycarbonate erfolgt vorzugsweise nach dem Phasengrenzflächenverfahren oder dem Schmelze-Umesterungsverfahren, welche mannigfaltig in der Literatur beschrieben werden.

Zum Phasengrenzflächenverfahren sei beispielhaft auf H. Schnell, "Chemistry and Physics of Polycarbonates", Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP 0 517 044 A1 verwiesen.

Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate werden bevorzugt durch Reaktionen von Bisphenolverbindungen mit Kohlensäureverbindungen, insbesondere Phosgen oder beim Schmelzeumesterungsprozess Diphenylcarbonat bzw. Dimethylcarbonat, dargestellt.

Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt.

Diese und weitere Bisphenol- bzw. Diolverbindungen, die sich für die Polycarbonatsynthese einsetzen lassen, sind unter anderem offenbart in WO 2008037364 A1 (s.7, Z. 21 bis s. 10, Z. 5), EP 1 582 549 A1 ([0018] bis [0034]), WO 2002026862 A1 (S. 2, Z. 20 bis S. 5, Z. 14), WO 2005113639 A1 (S. 2, Z.1 bis S. 7, Z. 20).

Die Polycarbonate können linear oder verzweigt sein. Es können auch Mischungen aus verzweigten und unverzweigten Polycarbonaten eingestzt werden.

Geeignete Verzweiger für Polycarbonate sind aus der Literatur bekannt und beispielsweise beschrieben in den Patentschriften US-B 4 185 009 und DE 25 00 092 A1 (erfindungsgemäße 3,3-bis-(4-hydroxyaryl-oxindole, s. jeweils gesamtes Dokument), DE 42 40 313 A1 (s. S. 3, Z. 33 bis 55), DE 19 943 642 A1 (s. S. 5, Z. 25 bis 34) und US-B 5 367 044 sowie in hierin zitierter Literatur.

Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP 1 506 249 A1 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

### Komponente 1.3) der Basisschicht.

Der Ruß liegt bevorzugt fein dispergiert in der organischen Polymermatrix vor, wobei kein Dispergiermittel mit funktionellen Gruppen verwendet wird. Geeignete Ruße weisen eine durchschnittliche Teilchengröße auf von bevorzugt weniger als 100 Nanometer (nm), weiter bevorzugt weniger als 75 nm, noch weiter bevorzugt weniger als 50 nm und besonders bevorzugt weniger als 40 nm, wobei die durchschnittliche Teilchengröße vorzugsweise größer als 0,5 nm, weiter bevorzugt größer als 1 nm und besonders bevorzugt größer als 5 nm ist.

Im Sinne der Erfindung geeignete Ruße unterscheiden sich von sogenannten Leitrußen dadurch, dass sie nur geringe oder keine elektrische Leitfähigkeit aufweisen. Leitruße weisen im Vergleich zu den hier verwendeten Rußen bestimmte Morphologien und Überstrukturen auf, um eine hohe Leitfähigkeit zu erzielen. Demgegenüber lassen sich die hier verwendeten nanoskaligen Ruße sehr gut in Thermoplasten dispergieren, so dass kaum zusammenhängende Bereiche aus Ruß auftreten, aus denen eine entsprechende Leitfähigkeit resultieren könnte. Kommerziell erhältliche und im Sinne der Erfindung geeignete Ruße sind unter einer Vielzahl von Handelsnamen und Formen, wie Pellets oder Pulver, erhältlich. So sind geeignete Ruße unter den Handelsnamen BLACK PEARLS®, als nass-verarbeitete Pellets unter den Namen ELFTEX®, REGAL® und CSX®, und in einer flockigen Erscheinungsform unter MONARCH®, ELFTEX®, REGAL® und MOGUL® - alle erhältlich von Cabot Corporation.

In einer besonders bevorzugten Ausführungsform weisen die Ruß-Typen Partikelgrößen von 10 nm - 30 nm auf und haben eine Oberfläche von vorzugsweise 35 m² - 138 m² pro g (m²/g). Der Ruß kann behandelt oder unbehandelt sein - so kann der Ruß mit bestimmten Gasen, mit Silica oder organischen Substanzen, wie z.B. Butyllithium behandelt sein. Durch eine derartige Behandlung kann eine Modifizierung oder Funktionlisierung der Oberfläche erreicht werden. Dies kann die Kompatibiliät zur entsprechend eingesetzten Matrix fördern. Insbesondere bevorzugt sind Ruße, die unter dem Handelsnamen BLACK PEARLS® (CAS-Nr. 1333-86-4) gehandelt werden.

### Komponente 1.5).

Im Rahmen der vorliegenden Erfindung werden Entformungsmittel auf Basis eines Fettsäureesters, bevorzugt eines Stearinsäureesters, weiter bevorzugt auf Basis von Pentaerythrit verwendet.

Die Entformungsmittel werden, sofern optional vorhanden, vorzugsweise in einer Konzentration von 0,1 bis 0,5 Gew.-%, insbesondere bevorzugt von 0,2 bis 0,45 Gew.-% eingesetzt.

In einer Ausführungsform werden besonders bevorzugt Pentaerythrittetrastearat (PETS) oder Glycerinmonostearat (GMS) eingesetzt.

### Komponente 1.6).

Geeignete Ultraviolett-Absorber (UV-Absorber) sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in den EP-A 0 839 623, WO-A 96/15102 und EP-A 0 500 496 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, Ciba Spezialitätenchemie, Basel), 2-(2'-Hydroxy-5'-(tert.-octyl)-phenyl)-benzotriazol (Tinuvin^{®} 329, Ciba Spezialitätenchemie, Basel), 2-(2'-Hydroxy-3'-(2-butyl)-5'-(tert.butyl)-phenyl)-benzotriazol (Tinuvin^{®} 350, Ciba Spezialitätenchemie, Basel), Bis-(3-(2H-benztriazolyl)-2-hydroxy-5-tert.-octyl)methan, (Tinuvin^{®} 360, Ciba Spezialitätenchemie, Basel), (2-(4,6-diphenyl-1,3,5-triazin-2-yl)-5-(hexyloxy)-phenol (Tinuvin^{®} 1577, Ciba Spezialitätenchemie, Basel), sowie der Benzophenone 2,4-Dihydroxy-benzophenon (Chimasorb^{®} 22 , Ciba Spezialitätenchemie, Basel) und 2-Hydroxy-4-(octyloxy)-benzophenon (Chimassorb^{®} 81, Ciba, Basel), 2-Propenoic acid, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul^{®} 3030, BASF AG Ludwigshafen), 2-[2-hydroxy-4-(2-ethylhexyl)oxy]phenyl-4,6-di(4-phenyl)phenyl-1,3,5-triazine (CGX UVA 006, Ciba Spezialitätenchemie, Basel) oder Tetra-ethyl-2,2'-(1,4-phenylene-dimethylidene)-bismalonate (Hostavin^{®} B-Cap, Clariant AG).

### Es können auch Mischungen dieser Ultraviolett-Absorber eingesetzt werden.

Hinsichtlich der Menge des in der Zusammensetzung enthaltenen Ultraviolett-Absorbers liegen keine besonderen Beschränkungen vor, solange die gewünschte Absorption von UV-Strahlung des aus der Zusammensetzung hergestellten Formkörpers gewährleistet ist und der Schwarzeindruck durch die Eigenfarbe des UV-Absorbers nicht beeinträchtigt wird.

### Komponente 1.7)

Erfindungsgemäß geeignete Thermo- bzw. Verarbeitungsstabilisatoren in der Basisschichtsind Phosphite und Phosphonite sowie Phosphine. Beispiele sind Triphenylphosphit, Diphenylalkylphosphit, Phenyldialkylphosphit, Tris(nonylphenyl)phosphit, Trilaurylphosphit, Trioctadecyl phosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di- cumylphenyl)pentaerythritol diphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)- pentaerythritoldiphosphit, Bis(2,4,6-tris(tert-butylphenyl)pentaerythritoldiphosphit, Tristea-rylsorbitoltriphosphit, Tetrakis(2,4-di-tert-butylphenyl)-4,4'-biphenylen diphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritoldiphosphit, Triphenylphosphin (TPP), Trialkylphenylphosphin, Bisdiphenylphosphino-ethan oder ein Trinaphthylphosphin. Insbesondere bevorzugt werden Triphenylphosphin (TPP), Irgafos® 168 (Tris(2,4-di-tert-butyl-phenyl)-phosphit) und Tris(nonylphenyl)phosphit oder deren Mischungen eingesetzt.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox® 1010 (Pentaerythrit- 3-(4-hydroxy-3,5-di-tert-butylphenyl)propionat; CAS: 6683-19-8) und Irganox 1076® (2,6-Di-tert-butyl-4-(octadecanoxycarbonylethyl)phenol) eingesetzt.

In einer speziellen Ausführungsform der vorliegenden Erfindung werden die erfindungsgemäßen Phosphinverbindungen gemeinsam mit einem Phosphit oder einem phenolischen Antioxidans oder einer Mischung aus den beiden letztgenannten Verbindungen eingesetzt.

### Komponente 1.8)

Optional enthält die Basisschicht 0,0 Gew.-% bis 5,0 Gew.-%, bevorzugt 0,01 Gew.-% bis 1,00 Gew.-% mindestens eines weiteren Additivs. Bei den weiteren Additiven handelt es sich um übliche Polymeradditive, wie z.B. die in EP-A 0 839 623, WO-A 96/15102, EP-A 0 500 496 oder "Plastics Additives Handbook", Hans Zweifel, 5th Edition 2000, Hanser Verlag, München beschrieben sind wie z.B. Flammschutzmittel oder Fließverbesserer. Die bereits genannten Komponenten der Basisschicht sind in diesem Zusammenhang ausdrücklich ausgenommen.

Die obigen Mengenangaben beziehen sich jeweils auf die gesamte Polymer-Zusammensetzung.

Die Zusammensetzung muss unter den für Thermoplaste üblichen Temperaturen, d.h. bei Temperaturen oberhalb von 300 °C, wie z.B. 350 °C verarbeitbar sein, ohne dass sich bei der Verarbeitung die optischen Eigenschaften wie z.B. der Tiefenglanz oder die mechanischen Eigenschaften deutlich verändern.

Die Herstellung der Polymer-Zusammensetzung für die erfindungsgemäße Basisschicht, enthaltend die oben genannten Komponenten, erfolgt mit gängigen Einarbeitungsverfahren durch Zusammenführung, Vermischen und Homogenisieren, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die Komponenten der erfindungsgemäßen Zusammensetzung durch bekannte Verfahren wie unter anderem als Masterbatch eingebracht werden.

Die Verwendung von Masterbatchen sowie von Pulvermischungen oder kompaktierten Vormischungen ist insbesondere zum Einbringen der oben genannten Komponenten geeignet. Hierbei können wahlweise alle vorgenannten Komponenten vorgemischt werden. Alternativ sind aber auch Vormischungen der Komponenten möglich. In allen Fällen werden für eine bessere Dosierbarkeit bei der Herstellung der thermoplastischen Polymer-Zusammensetzungen die vorgenannten Komponenten-Vormischungen bevorzugt mit der pulverförmiger Polymerkomponente so aufgefüllt, dass gut handhabbare Gesamtvolumina entstehen.

In einer besonderen Ausführungsform können die oben genannten Komponenten zu einem Masterbatch vermischt werden, wobei die Vermischung bevorzugt in der Schmelze unter Einwirkung von Scherkräften (zum Beispiel in einem Kneter oder Zweischneckenextruder) stattfindet. Dieses Verfahren bietet den Vorteil, dass die Komponenten besser in der Polymermatrix verteilt werden. Zur Herstellung des Masterbatches wird als Polymermatrix bevorzugt der thermoplastische Kunststoff gewählt, der auch die Hauptkomponente der letztlichen Polymer-Gesamtzusammensetzung darstellt.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

In einer besonderen Ausführungsform besteht das Verfahren zur Herstellung von bewitterungsstabilen Mehrschichtkunststoffformteilen mit Tiefenganzoptik aus folgenden Schritten:
1. Herstellung eines Substratmaterials (Komponente A), enthaltend Polycarbonat mit einem MVR von 7 cm³/(10 min) bis 25 cm³/(10 min), bevorzugt 9 bis 21 cm³/(10 min) nach ISO 1133 (bei 300 °C und 1,2 kg Belastung), enthaltend die erfindungsgemäße Farbmittelkombination optional Thermostabilisator, insbesondere bevorzugt Triphenylphosphin, otional Entformer und optional UV-Stabilisator;
2. Herstellung eines Formteils aus Komponente B in spezieller Rahmengeometrie. Dabei müssen die Spritzgussparameter entsprechend optimiert werden, um eine hohe Oberflächenqualität zu erreichen. So ist es bevorzugt, bei hohen Werkzeugtemperaturen zu arbeitenM
3. Beschichtung des Formteils im Flutverfahren mit einer Primerlösung enthaltend
   a.) organisches Bindematerial, das eine Haftvermittlung zwischen PC und einem polysiloxanbasierten Lack ermöglicht,
   b.) mindestens einen UV-Absorber,
   c.) ein Lösemittel auf Alkoholbasis;

   Ablüften des Bauteils für 10 - 60 min bei Raumtemperatur und Härtung für 5 min bis 60 min bei 100 - 135 °C;
4. Beschichtung des Formteils mit einem Siloxanlack im Flutverfahren, enthaltend
   a.) Siliciumorganische Verbindungen der Formel RₙSiX₄₋ₙ (mit n von 1 bis 4) wobei R für aliphatische C₁- bis C₁₀-Reste, bevorzugt Methyl-, Ethyl-, Propyl-, Isopropyl-, Butyl-, und Isobutyl-, sowie Arylreste, bevorzugt Phenyl, und substituierte Arylreste steht und X für H, aliphatische C₁- bis C₁₀-Reste, bevorzugt Methyl-, Ethyl-, Propyl-, Isopropyl-, Butyl-, und Isobutyl-, sowie Arylreste, bevorzugt Phenyl, substituierte Arylreste, für OH, Cl steht oder partielle Kondensate derselben,
   b.) eine anorganische feinteilige Verbindung, bevorzugt SiO₂,
   c.) ein Lösemittel auf Alkoholbasis,
   d.) mindestens einen UV-Absorber.

Ablüften des Bauteils für 10 - 60 min bei Raumtemperatur und Härtung für 10 min bis 120 min bei 100 - 140 °C.

Die erfindungsgemäßen Polymer-Zusammensetzungen können zu Erzeugnissen oder Formkörpern verarbeitet werden, indem man beispielsweise die Polymer-Zusammensetzungen zunächst wie beschrieben zu Granulat extrudiert und dieses Granulat durch geeignete Verfahren zu verschiedenen Erzeugnissen oder Formkörpern in bekannter Weise verarbeitet.

Die erfindungsgemäßen Zusammensetzungen können in diesem Zusammenhang beispielsweise durch Heißpressen, Spinnen, Blasformen, Tiefziehen, Extrudieren oder Spritzgießen in Erzeugnisse, Formkörper oder geformte Gegenstände überführt werden. Bevorzugt ist hierbei das Spritzgießen oder Spritzprägen.

Spritzgießverfahren sind dem Fachmann bekannt und beispielsweise im "Handbuch Spritzgießen", Friedrich Johannnaber/Walter Michaeli, München; Wien: Hanser, 2001, ISBN 3-446-15632-1 oder "Anleitung zum Bau von Spritzgießwerkzeugen", Menges/Michaeli/Mohren, München; Wien: Hanser, 1999, ISBN 3-446-21258-2 beschrieben.

Extrusionsverfahren sind dem Fachmann bekannt und beispielsweise für die Coextrusion unter anderem beschrieben in EP-A 0 110 221, EP-A 0 110 238 und EP-A 0 716 919. Für Details des Adapter- und Düsenverfahrens siehe Johannaber/Ast:"Kunststoff-Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990.

Die Herstellung der Beschichtung kann über verschiedene Methoden erfolgen. Beispielsweise kann über verschiedene Methoden des Aufdampfens, z.B. über Elektronenstrahlverfahren, Widerstandserhitzung sowie über Plasmaabscheidung oder verschiedener Sputtermethoden wie Hochfrequenz-Sputtern, Magnetron-Sputtern, Ionenstrahl-Sputtern usw., Ionenplattieren mittels DC-, RF-, HCD-Methoden, Reaktiv-Ionenplattieren usw. oder chemischer Gasphasenabscheidung eine Beschichtung erfolgen.

Neben dem oben genannten bevorzugten Verfahren sind also verschiedene Methoden bekannt, um eine Kratzfestbeschichtung auf Kunststoffartikeln herzustellen. Beispielsweise können Epoxy-, Acryl-, Polysiloxan-, kolloidales Kieselgel-, oder anorganisch/organisch (Hybridsysteme) basierte Lacke verwendet werden. Diese Systeme können beispielsweise über Tauchverfahren, Spincoating, Sprühverfahren, oder Fließbeschichtung aufgebracht werden. Die Aushärtung kann thermisch oder mittels UV-Bestrahlung erfolgen. Es können Ein- oder Mehrschichtsysteme verwendet werden. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasmagestützte Polymerisationsverfahren aufgebracht werden, z.B. über ein SiO₂-Plasma. Antibeschlags- oder Antireflex-Beschichtungen können ebenfalls über Plasmaverfahren hergestellt werden. Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen. In der Kratzfestschicht können verschiedene Additive, wie z.B. UV-Absorber, abgeleitet z.B. von Triazolen oder Triazinen, vorhanden sein. Ferner können IR-Absorber organischer oder anorganischer Natur enthalten sein. Diese Additive können im Kratzfestlack selbst oder in der Primerschicht enthalten sein. Die Dicke der Kratzfestschicht beträgt 2 - 15 µm. Unterhalb von 1 µm ist die Beständigkeit der Kratzfestschicht ungenügend. Oberhalb von 20 µm treten häufiger Risse im Lack auf.

Für Polycarbonate wird bevorzugt ein UV-Absorber enthaltener Primer eingesetzt, um die Haftung des Kratzfestlackes zu verbessern. Der Primer kann weitere Stabilisatoren wie z.B. HALS-Systeme (Stabilisatoren auf Basis sterisch gehinderter Amine), Haftvermittler, Fließhilfsmittel enthalten. Das jeweilige Harz kann aus einer Vielzahl von Materialien ausgewählt werden und ist z.B. in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melaminbasierte, Epoxy- und Alkyd-Systeme oder Mischungen dieser Systeme eingesetzt werden. Das Harz wird meist in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50 °C und 130 °C eingesetzt - häufig, nachdem ein Großteil des Lösemittels kurzzeitig bei Raumtemperatur entfernt wurde. Kommerziell erhältliche Systeme sind z.B. SHP470, SHP470FT und SHP401 der Firma Momentive Performance Materials. Derartige Beschichtungen sind z.B. in US 6350512 B1, US 5869185, EP 1308084, WO 2006/108520 beschrieben.

Kratzfest-Lacke (Hard-Coat) sind bevorzugt aus Siloxanen aufgebaut und enthalten bevorzugt UV-Absorber. Sie werden bevorzugt über Tauch- oder Fließverfahren aufgebracht. Die Aushärtung erfolgt bei Temperaturen von 50 °C - 130 °C. Kommerziell erhältliche Systeme sind z.B. AS4000, SHC5020 und AS4700 (CAS: 857052-28-9) von Momentive Performance Materials. Derartige Systeme sind z.B. in US 5041313, DE 3121385, US 5391795, WO 2008/109072 beschrieben. Die Synthese dieser Materialien erfolgt meist über Kondensation von Alkoxy- und/oder Alkylalkoxysilanen unter Säure- oder Basenkatalyse. Optional können Nanopartikel eingearbeitet werden. Bevorzugte Lösemittel sind Alkohole wie Butanol, Isopropanol, Methanol, Ethanol und deren Mischungen.

Anstatt von Primer / Kratzfestbeschichtungs-Kombinationen können Einkomponenten-Hybrid-Systeme eingesetzt werden. Diese sind z.B. in EP0570165 oder WO 2008/071363 oder DE 2804283 beschrieben. Kommerziell erhältliche Hybrid-Systeme sind z.B. unter den Namen PHC587 oder UVHC 3000 von Momentive Performance Materials erhältlich.

Insbesondere bevorzugt wird als Primer ein haftvermittelnder UV-Schutzprimer auf Basis von Polymethylmethacrylat, enthaltend 1-Methoxy-2-propanol und Diacetonalkohol als Lösemittel und eine UV-Absorberkombination enthaltend Dibenzoylresorcin und ein Traizinderivat verwendet. Der Decklack ist insbesondere bevorzugt ein Polysiloxandecklack aus einem Sol-Gel Kondensat aus Methyltrimethylsilan mit Kieselsol enthaltend einen silylierten UV-Absorber.

In einem besonders bevorzugten Verfahren erfolgt die Applikation des Lackes über das Flutverfahren, da es zu beschichteten Teilen mit hoher optischer Qualität führt.

Das Flutverfahren kann manuell mit Schlauch oder geeignetem Beschichtungskopf oder automatisch im Durchlauf über Flutlackierroboter- und gegebenenfalls Schlitzdüsen erfolgen.

Hierbei können die Bauteile, sowohl hängend als auch in einem entsprechenden Warenträger gelagert, beschichtet werden.

Bei größeren und/oder 3D-Bauteilen wird das zu beschichtende Teil in einen geeigneten Warenträger eingehängt oder aufgesetzt.

Bei Kleinteilen kann die Beschichtung auch per Hand durchgeführt werden. Hierbei wird die zu schichtende flüssige Primer- oder Lacklösung, ausgehend von der oberen Kante des Kleinteiles, in Längsrichtung über die Platte gegossen, während gleichzeitig der Ansatzpunkt des Lackes auf der Platte von links nach rechts über die Plattenbreite geführt wird. Die lackierten Platten werden senkrecht an einer Klammer hängend nach den jeweiligen Herstellervorgaben abgelüftet und gehärtet.

Die erfindungsgemäßen Mehrschichtkörper lassen sich besonders bevorzugt als Rahmen für Scheiben-Modulen für Automobile, Schienen- und Luftfahrzeuge einsetzen. Auch andere Rahmenteile sind bevorzugt.

### Beispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

### Schmelzvolumenrate:

Die Bestimmung des Schmelzvolumenrate (MVR) erfolgt nach ISO 1133 (bei 300 °C; 1,2 kg)

### Lichttransmission (Ty):

Die Transmissionsmessungen wurden an einem Lambda 900 Spektralphotometer der Firma Perkin Elmer mit Photometerkugel nach ISO 13468-2 durchgeführt (d.h. Bestimmung der Gesamttransmission durch Messung der diffusen Transmission und direkten Transmission).

### Ausblutverhalten/Lackierbarkeit:

Das Ausblut-Verhalten wird durch einen Test, in dem das Granulat mit für Polycarbonat geeigneter Lacklösung beaufschlagt wird, bestimmt.

Dazu werden 10 g Granulat in 90 g Lacklösemittel (Diacetonalkohol/ 2-Methoxypropanol (15% Gew.-%/ 85 Gew.-%) werden im Erlenmeyerkolben gerührt. Nach unterschiedlichen Zeiten wird von der sich langsam färbenden Lacklösung eine Menge (ca. 2ml) entnommen und in eine Glasküvette (1 cm Schichtdicke) gefüllt. Die Küvette wird am PE Lambda 900, in Transmission vor der Photometerkugel vermessen und der Gelbwert (YI) für Lichtart D 65 und 10° Normalbeobachter über die Messung der Farbkoordinaten (CIE) bestimmt und nach ASTM E313 berechnet. Dabei wird der Messwert des reinen Lacklösemittels (Diacetonalkohol/ 2-Methoxypropanol (15% Gew.-% / 85 Gew.-%) von den jeweiligen Messwerten, d.h. der angefärbten Lacklösung, abgezogen.

### Materialien zur Herstellung der Probekörper:

- Lineares Bisphenol-A-Polycarbonat mit Endgruppen basierend auf Phenol mit einer Schmelze-Volumenrate (MVR) von 6 cm³/10 min, gemessen bei 300 °C und 1,2 kg Belastung gemäß ISO 1033), nachfolgend als PC 1 bezeichnet.
- Lineares Bisphenol-A-Polycarbonat mit Endgruppen basierend auf Phenol mit einem MVR von 12,5 cm³/10 min, gemessen bei 300 °C und 1,2 kg Belastung gemäß ISO 1033), nachfolgend als PC 2 bezeichnet. PC 2 enthält noch eine Additivmischung bestehend aus Entformungsmittel, Thermostabilisator und UV-Stabilisator. Als Entformungsmittel wird Pentaerythrittetrastearat (CAS 115-83-3), als Thermostabilisator Triphenylphosphin (CAS 603-35-0) und als UV-Stabilisator Tinuvin® 329 (CAS 3147-75-9) eingesetzt.
- Als nanoskaliger Ruß (Partikelgröße ca . 17 nm) werden Black Pearls® 800 (CAS-No. 1333-86-4) der Firma Cabot Corp. eingesetzt.

### Farbmittel

- Als Farbmittel der Formel (1a, 1b) wird das Produkt aus I (alle R = H, siehe unten) verwendet.
- Als Farbmittel der Formel (2a, 2b) wird das Produkt aus II (alle R = H, siehe unten) verwendet.
- Als Farbmittel der Formel (3) wird Macrolex Violet B (Solvent Violet 13, CAS-No. 81-48-1) von der Firma Lanxess AG, Leverkusen, verwendet.

### I) Herstellung eines 1:1 Gemisches (Gew.-%) von (1a) und (1b):

5,62g (0,025mol) Benzol-1,2,4,5-tetracarbonsäuredianhydrid und 7,99g (0,05mol) 1,8-Diaminonaphthalin werden in 75ml n- Ethylpyrrolidon bei Raumtemperatur vorlegt und langsam auf 150 °C erhitzt. Bei dieser Temperatur wird für 5 Stunden gerührt. Nach Abkühlen werden 125ml Wasser zugegeben und der ausgefallene Niederschlag abfiltriert. Der Niederschlag wird noch mehrmals in Wasser aufgeschlämmt und auf diese Art gewaschen. Der Niederschlag wird im Hochvakuum bei 80°C getrocknet. Der getrocknete Niederschlag wird mit einer Mischung aus 50ml Eisessig und 25ml Acetanhydrid versetzt. Das Gemisch wird für 4 Stunden unter Rückfluss gekocht. Nach Abkühlen wird das Reaktionsgemisch in 500ml Wasser gegeben. Der Niederschlag wird abfiltriert, mit Wasser gewaschen und im Hochvakuum bei 80 °C getrocknet. Man erhält 12,5g lila-farbendes Pulver.

### II) Herstellung eines 1:1 Gemisches (Gew.-%) von (2a) und (2b):

6,71g (0,025mol) Naphthalin-1,4,5,8- tetracarbonsäuredianhydrid und 7,99g (0,05mol) 1,8-Diaminonaphthalin werden in 75ml n- Ethylpyrrolidon bei Raumtemperatur vorlegt und langsam auf 150 °C erhitzt. Bei dieser Temperatur wird für 5 Stunden gerührt. Nach Abkühlen werden 152ml Wasser zugegeben und der ausgefallene Niederschlag abfiltriert. Der Niederschlag wird noch mehrmals in Wasser aufgeschlämmt und auf diese Art gewaschen. Der Niederschlag wird im Hochvakuum bei 80 °C getrocknet. Der getrocknete Niederschlag wird mit einer Mischung aus 50ml Eisessig und 25ml Acetanhydrid versetzt. Das Gemisch wird für 4 Stunden unter Rückfluss gekocht. Nach Abkühlen wird das Reaktionsgemisch in 125ml Wasser gegeben. Der Niederschlag wird abfiltriert, mit heißem Wasser gewaschen und im Hochvakuum bei 80 °C getrocknet. Man erhält 13,7g lila-farbendes Pulver.

### Herstellung der thermoplastischen Polymer-Zusammensetzungen durch Compoundierung:

Die Compoundierung der Additive erfolgte auf einem Zweiwellenextruder der Firma KraussMaffei Berstorff, TYP ZE25, bei einer Gehäusetemperatur von 260°C bzw. einer Massetemperatur von 270°C und einer Drehzahl von 100 Upm bei einem Durchsatz von 10kg/h mit der in den Beispielen angegebenen Mengen an Komponenten. Hierbei wird zunächst zur besseren Vermischung eine Pulvermischung aus PC 1 (10 Gew.-% Pulvermischung bezogen auf die Gesamtzusammensetzung) enthaltend die unten angegebenen weiteren Komponenten angefertigt. Diese Pulvermischung wird bei der Compoundierung zu PC 2 zudosiert.

### Herstellung der Prüfkörper:

Das Granulat wird bei 120 °C für 3 Stunden im Vakuum getrocknet und anschließend auf einer Spritzgussmaschine vom Typ Arburg 370 mit einer 25-Spritzeinheit bei einer Massetemperatur von 300°C und einer Werkzeugtemperatur von 90 °C zu optischen Rundplatten mit einem Durchmesser von 80 mm und einer Dicke von 2,0 mm verarbeitet.

### Beispiel 1 (Vergleichsbeispiel)

Es wird eine Polymerzusammensetzung enthaltend die Mengen der folgenden Komponenten wie oben beschrieben durch Compoundierung hergestellt:

| | |
|---|---|
| Macrolex Violett B (Farbmittel für Vergleichsbeispiele): | 0,20 Gew.-% |
| Black Pearls® 800 (Komponente b)): | 0,02 Gew.-% |

Es werden wie oben Musterplatten und Granulat angefertigt.

### Beispiel 2 (Erfindungsgemäß)

Es wird eine Polymerzusammensetzung enthaltend die Mengen der folgenden Komponenten wie oben beschrieben durch Compoundierung hergestellt:

| | |
|---|---|
| 1:1 Gemisches (Gew.-%) von (1a) und (1b) (Komponente a)): | 0,10 Gew.-% |
| 1:1 Gemisches (Gew.-%) von (2a) und (2b) (Komponente a)): | 0,10 Gew.-% |

Es werden wie oben Musterplatten und Granulat angefertigt.

### Messung der Lichttransmission:

Die Musterplatten aus den Beispielen 1 und 2 weisen eine Lichttransmission von weniger als 0,1 % auf.

### Visuelle Abmusterung:

Die Musterplatten aus den Beispielen 1 und 2 werden visuell abgemustert. Sie weisen eine defektfreie Oberfläche und einen ausreichenden Schwarzeindruck auf.

**Tabelle 1: Test der Ausblutung am Granulat (wie oben beschrieben)**

| Extraktionsdauer | YI Beispiel 1 (Vergleich) | YI Beispiel 2 |
|---|---|---|
| 0 min | 0 | 0 |
| 30 min | -6,8 | -2,6 |
| 60 min | -11,6 | -4,5 |
| 120 min | -20,4 | -7,4 |
| 180 min | -29,9 | -9,2 |
| 270 min | -41,8 | -11,7 |
| 24 h | -113,3 | -28,6 |

Man erkennt deutlich, dass im Vergleichsmaterial Trotz des Einsatzes von Ruß die Lacklösung deutlich stärker als beim erfindungsgemäßen Granulat angefärbt wird. Bei Formkörpern, die eine deutlich geringere Oberfläche als Granulat aufweisen, ist bei Verwendung der erfindungsgemäßen Zusammensetzung kein Ausbluten zu befürchten wohingegen beim Vergleichsmaterial die Gefahr der Anfärbung der Lacklösung besteht.

## Patentansprüche

1. Mehrschichtkörper umfassend:
1) eine Basisschicht enthaltend
• mindestens einen Thermoplasten,
• mindestens ein Farbmittel ausgewählt aus der Gruppe bestehend aus den Strukturen 1a, 1b: 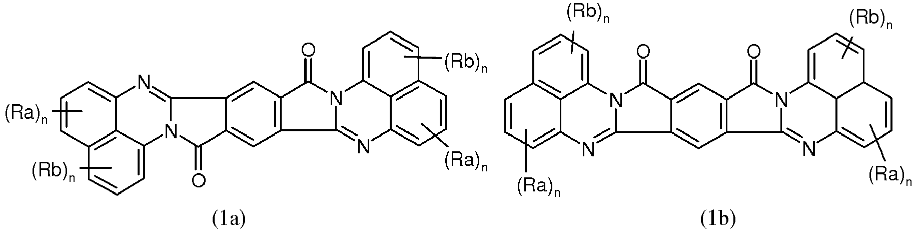 wobei
- Ra und Rb unabhängig voneinander für einen linearen oder verzweigten Alkylrest oder Halogen steht;
- n steht unabhängig vom jeweiligen R für eine natürliche Zahl zwischen 0 und 3, wobei der Rest für n=0 Wasserstoff ist; und
2a, 2b: 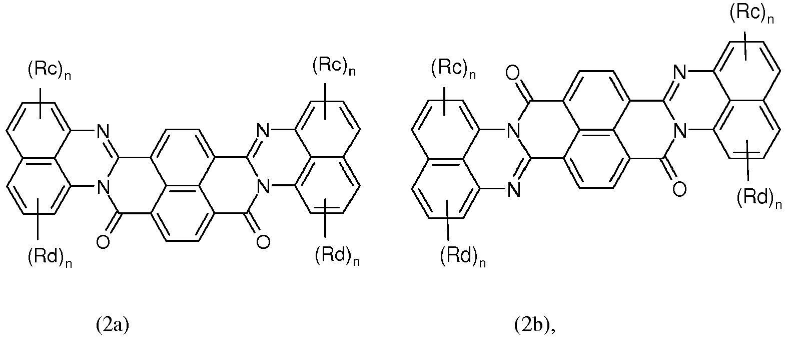 wobei
- Rc und Rd unabhängig voneinander für einen linearen oder verzweigten Alkylrest oder Halogen steht;
- n steht unabhängig vom jeweiligen R für eine natürliche Zahl zwischen 0 und 3, wobei der Rest für n=0 Wasserstoff ist;
mit einer Lichttransmission der Basisschicht, von weniger als 1%, bestimmt nach ISO 13468-2,
2) mindestens auf einer Seite der Basisschicht eine Kratzfestbeschichtung auf Polysiloxanbasis mit einer Dicke von 2 bis 15 µm, enthaltend mindestens einen UV-Absorber,
wobei, sofern die Farbmittel der Strukturen (1a), (1b), (2a) und (2b) einzeln eingesetzt werden, diese Farbmittel jeweils in Konzentrationen von 0,05 bis 0,50 Gew.-% eingesetzt werden.

2. Mehrschichtkörper nach Anspruch 1, **dadurch gekennzeichnet, dass** die Farbmittel der Strukturen (1a), (1b), (2a) und (2b) einzeln jeweils in Konzentrationen von 0,05 Gew.-% bis 0,50 Gew.-% eingesetzt werden.

3. Mehrschichtkörper nach Anspruch 1, **dadurch gekennzeichnet, dass** eine Kombination der Farbmittel der Strukturen (1a), (1b), (2a) und (2b) eingesetzt wird.

4. Mehrschichtkörper nach einem der vorhergehenden Ansprüche, **dadurch gekennzeichnet, dass** die Basisschicht eine Kombination der Farbmittel (1a)/(1b) und/oder (2a)/2(b) sowie mindestens ein weiteres Farbmittel enthält, ausgewählt aus der Gruppe, bestehend aus: 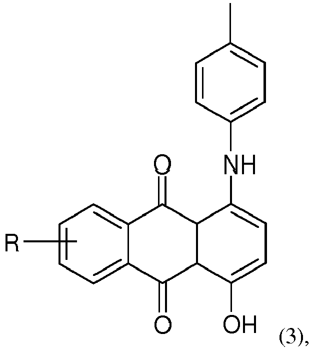 wobei R ausgewählt ist aus der Gruppe, die aus H und p-Methylphenlyamin-Rest besteht; 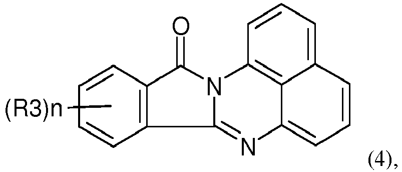 wobei
R3 Halogen ist;
n=4 ist;. 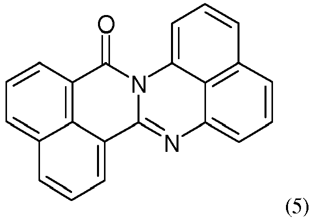 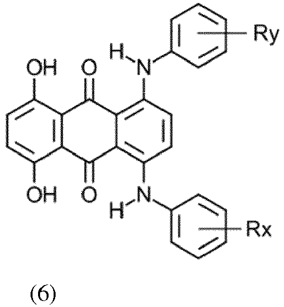 wobei Rx und Ry für n-Butyl, tert-Butyl oder Methyl stehen, 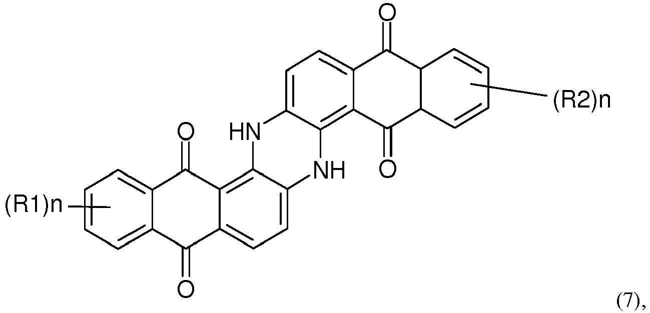
wobei
- R1 und R2 unabhängig voneinander für einen linearen oder verzweigten Alkylrest oder Halogen stehen;
- n für eine natürliche Zahl zwischen 0 und 4 steht; 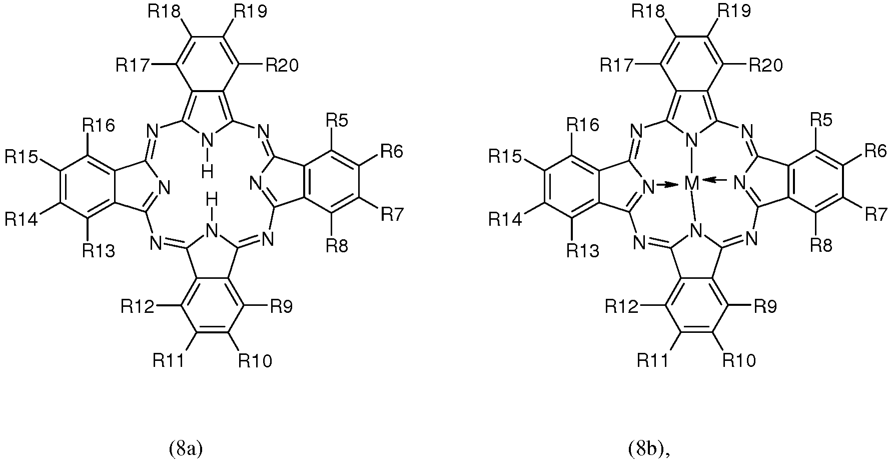 wobei
- die Reste R(5-20) jeweils unabhängig voneinander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon oder CN sind, und
- M ist ausgewählt aus der Gruppe, die aus Aluminium, Nickel, Cobalt, Eisen, Zink, Kupfer und Mangan besteht.

5. Mehrschichtkörper nach einem der vorhergehenden Ansprüche, **dadurch gekennzeichnet, dass** die Basisschicht Ruß in einer Konzentration von weniger als 0,03 Gew.-% enthält.

6. Mehrschichtkörper nach einem der vorhergehenden Ansprüche, **dadurch gekennzeichnet, dass** auf der Basisschicht zusätzlich eine haftvermittelnde Schicht mit einer Dicke von 0,3 bis 8 µm zwischen der Basisschicht und der Kratzfestschicht angeordnet ist, enthaltend mindestens einen UV-Absorber.

7. Mehrschichtkörper nach einem der vorhergehenden Ansprüche, **dadurch gekennzeichnet, dass** der Thermoplast ausgewählt ist aus der Gruppe, bestehend aus Polycarbonat und Polycarbonatblends mit einer Schmelzvolumenrate von 6 cm³/(10 min) bis 25 cm³/(10 min).

8. Mehrschichtkörper nach einem der vorhergehenden Ansprüche, **dadurch gekennzeichnet, dass** die Basisschicht einen Thermostabilisator enthält.

9. Mehrschichtkörper nach einem der vorhergehenden Ansprüche, **dadurch gekennzeichnet, dass** auf beiden Seiten der Basisschicht eine Kratzfestschicht sowie optional eine haftvermittelnde Schicht aufgetragen ist.

10. Mehrschichtkörper nach einem der vorhergehenden Ansprüche, **dadurch gekennzeichnet, dass** die Kratzfestschicht ein Polysiloxanlack ist.

11. Verfahren zur Herstellung eines Mehrschichtkörpers mit Tiefenglanzoptik, umfassend die Schritte:
- Herstellung der Farbmittel 1a, 1b, 2a, 2b,
- Herstellung eines Compounds enthaltend die Komponenten der Basisschicht nach Anspruch 1,
- Herstellung eines Formteils aus dem Compound,
- Beschichtung des Formteils mit einer Kratzfestschicht in einem einstufigen Beschichtungsprozesses.

12. Verfahren nach Anspruch 11, **dadurch gekennzeichnet, dass** vor der Beschichtung des Formteils mit der Kratzfestschicht eine Primerschicht aufgetragen wird.

13. Verfahren nach Anspruch 11 oder 12, **dadurch gekennzeichnet, dass** die Schritte in der gegebenen Reihenfolge ausgeführt werden.

14. Verwendung der Mehrschichtkörper als Fahrzeug-Außenteil, Fahrzeug-Innenteil und für Rahmenteile für Verscheibungen aus Glas oder Polycarbonat.

## Claims

1. Multilayer body comprising:
1) a base layer containing
· at least one thermoplastic,
· at least one colouring agent selected from the group consisting of
structures 1a, 1b: 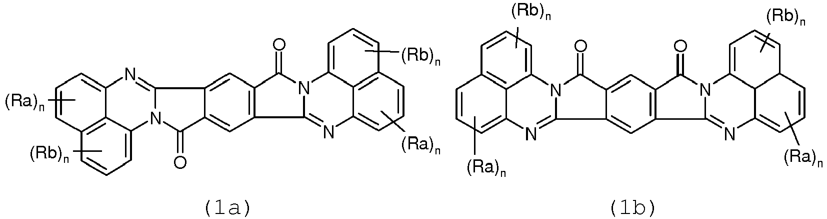 in which
- Ra and Rb independently of each other denote a linear or branched alkyl radical, or halogen;
- n independently of each R denotes a natural number between 0 and 3, the radical being hydrogen in the case of n=0; and
2a, 2b: 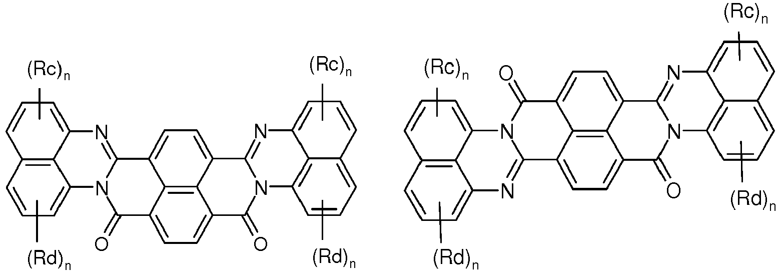 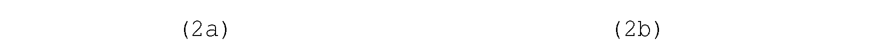 in which
- Rc and Rd independently of each other denote a linear or branched alkyl radical, or halogen;
- n independently of each R denotes a natural number between 0 and 3, the radical being hydrogen in the case of n=0;
having a light transmission of the base layer of less than 1%, determined according to ISO 13468-2,
2) at least on one side of the base layer a polysiloxane-based scratch-resistant coating with a thickness from 2 to 15 µm, containing at least one UV absorber,
wherein, as long as the colouring agents of structures (1a), (1b), (2a) and (2b) are used individually, said colouring agents are each used in concentrations from 0.05 to 0.50 wit.%.

2. Multilayer body according to claim 1, **characterised in that** the colouring agents of structures (1a), (1b), (2a) and (2b) are each used individually in concentrations from 0.05 wt.% to 0.50 wt.%.

3. Multilayer body according to claim 1, **characterised in that** a combination of the colouring agents of structures (1a), (1b), (2a) and (2b) is used.

4. Multilayer body according to one of the preceding claims, **characterised in that** the base layer contains a combination of colouring agents (1a)/(1b) and/or (2a)/(2b) and at least one further colouring agent selected from the group consisting of: 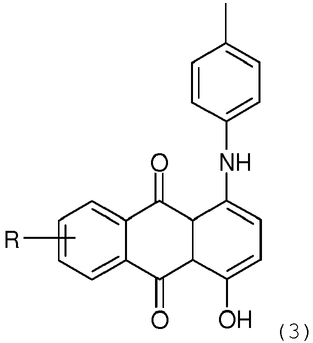 in which
R is selected from the group consisting of H and p-methyl phenylamine radical; 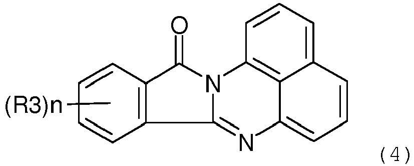 in which
R3 is halogen;
n=4; 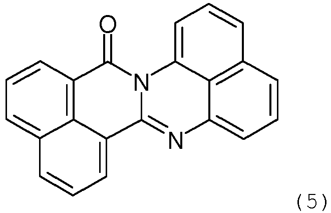 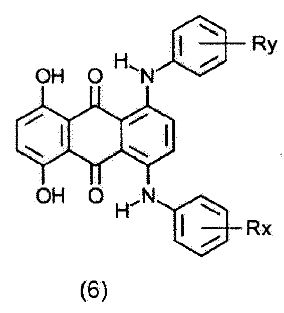
in which Rx and Ry denote n-butyl, tert-butyl or methyl, 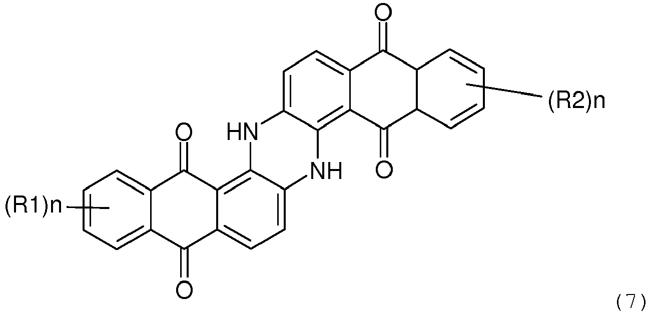 in which
- R1 and R2 independently of each other denote a linear or branched alkyl radical, or halogen;
- n denotes a natural number between 0 and 4; 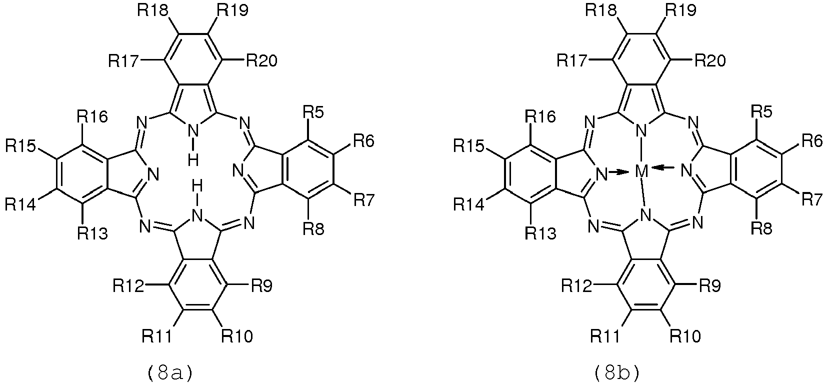
in which
- the radicals R(5-20) are in each case independently of one another hydrogen, methyl, ethyl, propyl, isopropyl, butyl, isobutyl, tert-butyl, pentyl, neopentyl, hexyl, thexyl, fluorine, chlorine, bromine, sulfone or CN, and
- M is selected from the group consisting of aluminium, nickel, cobalt, iron, zinc, copper and manganese.

5. Multilayer body according to one of the preceding claims, **characterised in that** the base layer contains carbon black in a concentration of less than 0.03 wt.-%.

6. Multilayer body according to one of the preceding claims, **characterised in that** an adhesion-promoting layer having a thickness from 0.3 to 8 µm and containing at least one UV absorber is additionally arranged on the base layer between the base layer and the scratch-resistant layer.

7. Multilayer body according to one of the preceding claims, **characterised in that** the thermoplastic is selected from the group comprising polycarbonate and polycarbonate blends having a melt volume-flow rate from 6 cm³/(10 min) to 25 cm³/(10 min).

8. Multilayer body according to one of the preceding claims, **characterised in that** the base layer contains a heat stabiliser.

9. Multilayer body according to one of the preceding claims, **characterised in that** a scratch-resistant layer and optionally an adhesion-promoting layer is applied to both sides of the base layer.

10. Multilayer body according to one of the preceding claims, **characterised in that** the scratch-resistant layer is a polysiloxane lacquer.

11. Method for producing a multilayer body having a deep-gloss appearance, comprising the following steps:
- production of the colouring agents 1a, 1b, 2a, 2b,
- production of a compound containing the components of the base layer according to claim 1,
- production of a moulded part from the compound,
- coating of the moulded part with a scratch-resistant layer in a single-stage coating process.

12. Method according to claim 11, **characterised in that** a primer layer is applied before the moulded part is coated with the scratch-resistant layer.

13. Method according to claim 11 or 12, **characterised in that** the steps are performed in the specified order.

14. Use of the multilayer bodies as an exterior vehicle part, interior vehicle part and for frame parts for glass or polycarbonate glazing systems.

## Revendications

1. Corps multicouche, comprenant :
1) une couche de base contenant :
- au moins un thermoplastique,
- au moins un colorant choisi dans le groupe constitué par
les structures 1a, 1b : 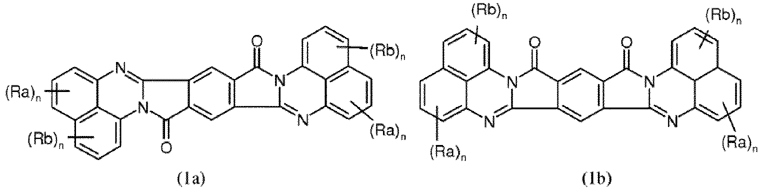 dans lesquelles
- Ra et Rb représentent indépendamment l'un de l'autre un radical alkyle linéaire ou ramifié ou un halogène ;
- n représente indépendamment du R en question un nombre naturel compris entre 0 et 3, le radical pour n = 0 étant l'hydrogène ; et
2a, 2b : 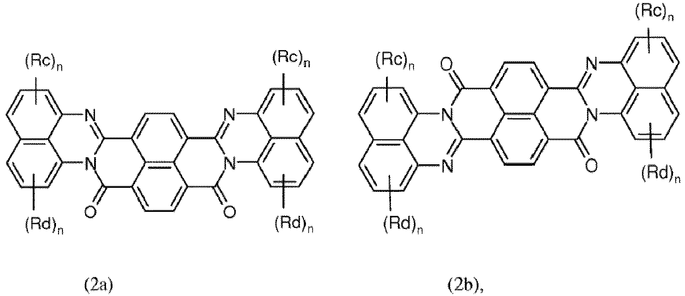 dans lesquelles
- Rc et Rd représentent indépendamment l'un de l'autre un radical alkyle linéaire ou ramifié ou un halogène ;
- n représente indépendamment du R en question un nombre naturel compris entre 0 et 3, le radical pour n = 0 étant l'hydrogène ;
ayant une transmission de la lumière de la couche de base de moins de 1 %, déterminée selon ISO 13468-2,
2) un revêtement résistant aux éraflures au moins sur un côté de la couche de base, à base de polysiloxane, d'une épaisseur de 2 à 15 µm, contenant au moins un absorbeur UV,
si les colorants des structures (1a), (1b), (2a) et (2b) sont utilisés individuellement, ces colorants étant chacun utilisés en concentrations de 0,05 à 0,50 % en poids.

2. Corps multicouche selon la revendication 1, **caractérisé en ce que** les colorants des structures (1a), (1b), (2a) et (2b) sont utilisés individuellement, chacun en concentrations de 0,05 à 0,50 % en poids.

3. Corps multicouche selon la revendication 1, **caractérisé en ce qu'**une combinaison des colorants des structures (1a), (1b), (2a) et (2b) est utilisée.

4. Corps multicouche selon l'une quelconque des revendications précédentes, **caractérisé en ce que** la couche de base contient une combinaison des colorants (1a)/(1b) et/ou (2a)/(2b), ainsi qu'au moins un autre colorant, choisi dans le groupe constitué par : 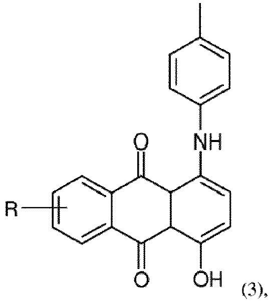
R étant choisi dans le groupe constitué par H et le radical p-méthylphénylamine ; 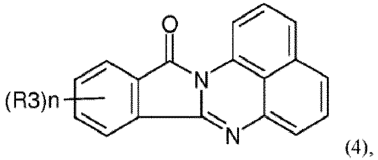
R3 représentant un halogène ;
n = 4 ; 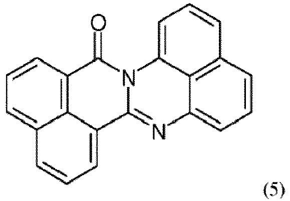 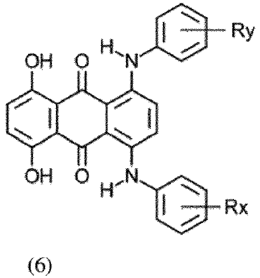
Rx et Ry représentant n-butyle, tert-butyle ou méthyle, 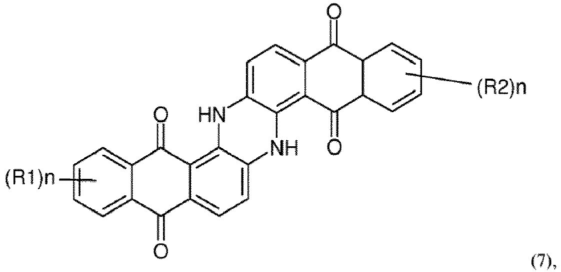
- R1 et R2 représentant indépendamment l'un de l'autre un radical alkyle linéaire ou ramifié ou un halogène ;
- n représentant un nombre naturel compris entre 0 et 4 ; 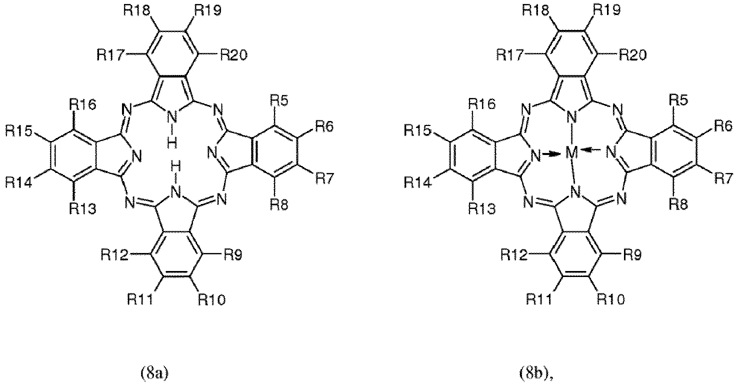
- les radicaux R(5-20) représentant chacun indépendamment les uns des autres hydrogène, méthyle, éthyle, propyle, isopropyle, butyle, isobutyle, tert.-butyle, pentyle, néopentyle, hexyle, thexyle, fluor, chlore, brome, sulfone ou CN, et
- M étant choisi dans le groupe constitué par l'aluminium, le nickel, le cobalt, le fer, le zinc, le cuivre et le manganèse.

5. Corps multicouche selon l'une quelconque des revendications précédentes, **caractérisé en ce que** la couche de base contient du noir de carbone en une concentration de moins de 0,03 % en poids.

6. Corps multicouche selon l'une quelconque des revendications précédentes, **caractérisé en ce qu'**une couche de promoteur d'adhésion d'une épaisseur de 0,3 à 8 µm est en outre agencée sur la couche de base entre la couche de base et la couche résistante aux éraflures, contenant au moins un absorbeur UV.

7. Corps multicouche selon l'une quelconque des revendications précédentes, **caractérisé en ce que** le thermoplastique est choisi dans le groupe constitué par le polycarbonate et les mélanges de polycarbonate ayant un indice de fluidité en volume de 6 cm³/(10 min) à 25 cm³/(10 min).

8. Corps multicouche selon l'une quelconque des revendications précédentes, **caractérisé en ce que** la couche de base contient un thermostabilisateur.

9. Corps multicouche selon l'une quelconque des revendications précédentes, **caractérisé en ce qu'**une couche résistante aux éraflures et éventuellement une couche de promoteur d'adhésion sont appliquées sur les deux côtés de la couche de base.

10. Corps multicouche selon l'une quelconque des revendications précédentes, **caractérisé en ce que** la couche résistante aux éraflures est un vernis de polysiloxane.

11. Procédé de fabrication d'un corps multicouche présentant une apparence à brillance profonde, comprenant les étapes suivantes :
- la fabrication des colorants 1a, 1b, 2a, 2b,
- la fabrication d'un composé contenant les composants de la couche de base selon la revendication 1,
- la fabrication d'une pièce moulée à partir du composé,
- le revêtement de la pièce moulée avec une couche résistante aux éraflures par un procédé de revêtement à une étape.

12. Procédé selon la revendication 11, **caractérisé en ce qu'**une couche d'apprêt est appliquée avant le revêtement de la pièce moulée avec la couche résistante aux éraflures.

13. Procédé selon la revendication 11 ou 12, **caractérisé en ce que** les étapes sont réalisées dans l'ordre indiqué.

14. Utilisation du corps multicouche en tant que pièce extérieure de véhicule, pièce intérieure de véhicule et pour des parties de cadre pour vitrages en verre ou polycarbonate.
